(19) Europäisches Patentamt
European Patent Office
Office européen des brevets

(11) Publication number: 0 180 149 A2

# (12) EUROPEAN PATENT APPLICATION

(21) Application number: 85113523.6

(22) Date of filing: 24.10.85

(51) Int. Cl.⁴: C 08 G 65/32, C 08 G 73/10

(30) Priority: 26.10.84 US 665192

(43) Date of publication of application: 07.05.86 Bulletin 86/19

(84) Designated Contracting States: DE FR GB IT NL

(71) Applicant: GENERAL ELECTRIC COMPANY, 1 River Road, Schenectady New York 12305 (US)

(72) Inventor: McCready, Russell James, 10301 Eastgate South, Mt. Vernon Indiana 47260 (US)

(74) Representative: Catherine, Alain et al, General Electric - Deutschland Munich Patent Operations Frauenstrasse 32, D-8000 München 5 (DE)

(54) **High molecular weight diimide diacids and diimide diesters of tricarboxylic anhydrides.**

(57) Novel diimide diacid compounds which are the reaction product of a tricarboxylic acid anhydride and a polyoxyalkylene diamine.

# HIGH MOLECULAR WEIGHT DIIMIDE DIACIDS AND DIIMIDE DIESTERS OF TRICARBOXYLIC ANHYDRIDES

~~Russell J. McCready~~

The present invention relates to high molecular weight diimide diacids and esters thereof prepared from a polyoxyalkylene diamine and a tricarboxylic anhydride compound as defined herein. These diimide diacids are useful in a number of applications and are particularly suitable for use in the preparation of polyetherimide esters and polyetherimide amides, which in turn may be used as adhesives, coating materials and molding and extrusion compositions.

Diimide diesters are known. For example, Pruckmayr et al, U.S. Patent 3,461,136, discloses diimide diesters prepared by reacting an aryl ester of a tricarboxylic acid anhydride with a diamine. Suitable diamines include $C_2$-$C_{20}$ aliphatic, cycloaliphatic and aromatic diamines as well as diamines of a bridged organic radical wherein the bridge is among others sulfur, oxygen, nitrogen, etc. These compounds may be used in the preparation of polyester imides and polyamide imides suitable for use as an impregnant and as a coating composition.

Additionally, Kluiber, U.S. Patent 3,274,159 disclosed polyesterimides of trimellitic anhydride wherein a diimide diacid is reacted with a divalent alcohol. The diimide diacids of this polyimide ester are the reaction product of trimellitic anhydride and a diprimary diamine of the formula

I $\quad H_2N - D - NH_2$

wherein D is selected from the group consisting of hydrocarbon materials, including aliphatic, alicyclic and aromatic radicals and hydrocarbon-ether radicals which may contain up to five ether oxygen atoms.

It is a purpose of the present invention to provide novel high molecular weight polyether

diimide-diacids and polyether diimide diesters, i.e. MW of greater than about 700, preferably greater than about 900, which are especially suitable for use in the manufacture of elastomeric polyetherimide amides and polyetherimide esters.

It is also a purpose of the present invention to provide novel high molecular weight polyether diimide diacids and polyether diimide diesters which are free flowing and have good stability, a low melting point (generally less than about 250°C.) and good molecular flexibility.

It has now been found that novel high molecular weight diimide diacids and diimide diesters having the foregoing qualities may be prepared from polyoxyalkylene diamines and a tricarboxylic component containing two imide forming vicinal carboxyl groups or an anhydride group and an additional carboxyl group. These diimide diesters and diimide diacids may be prepared in accordance with known methods for the preparation of diimides from diamines and anhydrides.

The polyoxylalkylene diamines suitable for use in the present invention may be characterized by the following formula:

II $$H_2N - G - NH_2$$

wherein G is the radical remaining after the removal of the hydroxy groups of a long chain ether glycol. These polyether diprimary diamines are available commercially from Texaco Chemical Company under the trademark Jeffamine. In general they are prepared by known process for the aminization of glycols. For example, they may be prepared by aminating the glycol in the presence of ammonia, Raney nickel catalyst and hydrogen as set forth in Belgium patent 634,741. Alternatively, they may be prepared by treating the glycol with ammonia and hydrogen over a Nickel-Copper-Chromium catalyst as taught by U.S. Patent 3,654,370.

Other methods for the production thereof include as taught in U.S. Patent Nos. 3,155,728 and 3,236,895 and French Patent Nos. 1,551,605 and 1,466,708. All the foregoing patents herein incorporated by reference.

The long chain ether glycols suitable for use in the manufacture of the polyoxyalkylene diamines are polymeric glycols having terminal (or as nearly terminal as possible) hydroxy groups and a molecular weight of from about 600 to about 12000. Additionally, the long chain ether glycols will have a carbon to oxygen ratio of from about 1.8 to about 4.3.

Representative long chain ether glycols are poly(ethylene ether)glycol; poly(propylene ether)glycol; poly(tetramethylene ether)glycol; random or block copolymers of ethylene oxide and propylene oxide, including propylene oxide terminated poly(ethylene ether) glycol; and random or block copolymers of tetrahydrofuran with minor amounts of a second monomer such as methyl tetrahydrofuran (used in proportion such that the carbon-to-oxygen mole ratio in the glycol does not exceed about 4.3). Especially preferred poly(alkylene ether)glycols are poly(propylene ether) glycol and poly(ethylene ether)glycols end capped with poly(propylene ether)glycol and/or propylene oxide.

In general, the polyoxyalkylene diamines useful within the scope of the present invention will have an average molecular of from about 600 to 12000, preferably from about 900 to about 4000.

The tricarboxylic component may be almost any carboxylic acid anhydride containing an additional carboxylic group or the corresponding acid thereof containing two imide-forming vicinal carboxyl groups in lieu of the anhydride group. Mixtures thereof are also suitable. The additional carboxylic group must be esterifiable and preferably is substantially nonimidizable.

While trimellitic anhdyride is preferred as the tricarboxylic component, any of a number of suitable tricarboxylic acid constituents will occur to those skilled in the art including 2,6,7 naphthalene tricarboxylic anhydride; 3,3',4 diphenyl tricarboxylic anhydride; 3,3',4 benzophenone tricarboxylic anhydride; 1,3,4 cyclopentane tricarboxylic anhydride; 2,2',3 diphenyl tricarboxylic anhydride; diphenyl sulfone - 3,3',4 tricarboxylic anhydride, ethylene tricarboxylic anhydride; 1,2,5 napthalene tricarboxylic anhydride; 1,2,4 butane tricarboxylic anhydride; diphenyl isopropylidene - 3,3',4 tricarboxylic anhydride; 3,4 dicarboxyphenyl 3-carboxylphenyl ether anhydride; 1,3,4 cyclohexane tricarboxylic anhydride; etc. These tricarboxylic acid materials can be characterized by the following formula:

III 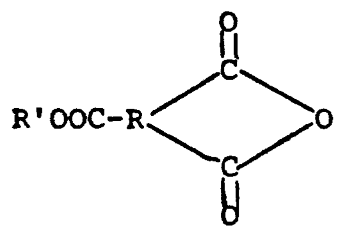

where R is a trivalent organic radical, preferably a $C_2$ to $C_{20}$ aliphatic, aromatic, or cycloaliphatic trivalent organic radical and R' is preferably hydrogen or a monovalent organic radical preferably selected from the group consisting of $C_1$ to $C_6$ aliphatic and/or cycloaliphatic radicals and $C_6$ to $C_{12}$ aromatic radicals, e.g. benzyl; most preferably hydrogen.

The amount of tricarboxylic component to be used in the preparation of the diimide diacids of the present invention is preferably two molar equivalents based on the number of moles of diamines. Obviously, less than two molar equivalents would result in incomplete imidization of the diamine. It is also possible to use more than two molar equivalents to assure optimal imidization.

The diimide diacids and diimide diesters of the present invention may be prepared by any of the known methods for the imidization of anhydrides with diamines. Exemplary of the methods include melt synthesis wherein the anhydride and diamine are heated at between about 100°C. - 300°C., preferably from about 150° - 250°C., while drawing off water, for several hours to produce the diimide. Alternatively, they may be produced by heating in a solvent including, for example, dimethylformamide, diethylformamide, diethylacetamide, N-methylcaprolactam, or dimethylsulfoxide, among others known to those skilled in the art, or in an azeotropic mixture of said solvent with an additional inert solvent, e.g. xylene, and refluxed at between about 100° - 300°C., preferably from about 150°C. - 250°C., for several hours to form the diimide. The solvent is subsequently removed by distillation and the residual solvent removed by vacuum drying to leave the diimide diacid as a viscous oily substance.

The resultant diimide diacids or diimide diester, as appropriate, is an oily substance, the viscosity of which is dependent in part upon the temperature and the specific diamine used. They may be represented by the following formula:

IV 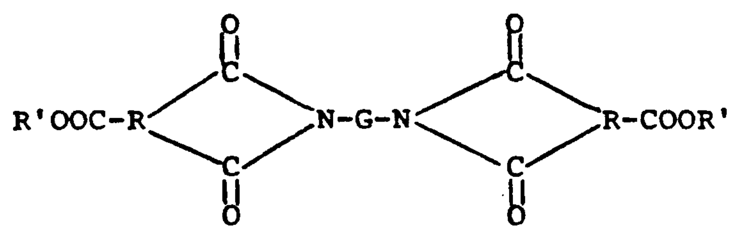

wherein R, R' and G are all as defined above. In general the diimide diacids of the present invention are free flowing and have a molecular weight of greater than about 700, preferably greater than about 900.

The novel diimide diacids and diimide diesters of the present invention are particularly useful as a polymer intermediate, especially in the preparation of high molecular weight thermoplastic and elastomeric polymers such as poly(etherimide esters) and poly-(etherimide amides).

The following examples are illustrative of the practice of the present invention and are not to be construed as limiting in any way.

EXAMPLE I

Into a reaction vessel were placed 100 parts by weight of Jeffamine® D2000 (amine terminated polyoxy propylene glycol - approx. MW 2000 from Texaco Chemical Company) and 19.2 parts by weight of trimellitic anhydride and an excess of an azeotropic solvent mixture of 80/20 dimethylformamide/xylene to solublize the foregoing. (Xylene was employed in order to observe the formation of water during the reaction.) The mixture was heated to and refluxed at the reflux temperature of the solvent mixture for about 3 hours. The solvent mixture was distilled off and the remaining diimide diacid vacuum dried to remove residual solvent leaving a viscous oily substance identified as the diimide diacid reaction product of the reactants.

EXAMPLE 2

Into a reaction vessel was placed 100 parts by weight of Jeffamine® ED900 (amine terminated poly-(ethylene oxide - propylene oxide)glycol approximate MW 900 - Texaco Chemical Company) and 42.7 parts by weight trimellitic anhydride. The mixture was heated and stirred at 180°C. for two hours during which time water was distilled off. The reaction produced a viscous oily diimide diacid.

EXAMPLE 3

Additional diimide diacids were prepared as in Example 2 utilizing Jeffamine® D2000 and Jeffamine ED2001 [amine terminated poly(propylene oxide)glycol - approx. MW 2000 and amine terminated poly(ethylene oxide - propylene oxide)glycol approx. MW 2000 having a predominately poly(ethylene oxide) backbone, respectively] and trimellitic anhydride in a mole ratio of 1:2 Jeffamine: TMA. These reactions also produced viscous oily diimide diacids.

CLAIMS:

1. A high molecular weight diimide diacid compound which is the imidization reaction product of
   a) a tricarboxylic acid anhydride or the corresponding acid thereof containing two vicinal carboxyl groups and
   b) a polyoxyalkylene diamine of the formula

$$H_2N - G - NH_2$$

   wherein G is the divalent radical remaining after the removal of the hydroxy groups of a long chain poly(alkylene ether)glycol having a molecular weight of from about 600 to about 12000.

2. The high molecular weight diimide diacid of Claim 1 wherein the tricarboxylic acid anhydride is represented by the formula:

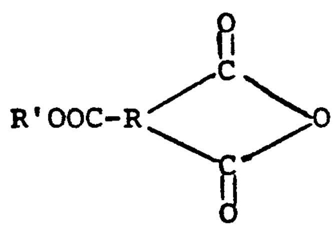

wherein R a $C_2$ to $C_{20}$ aliphatic, cycloaliphatic or aromatic trivalent radical and R' is selected from the group consisting of hydrogen, or a monovalent organic radical selected from the group consisting of $C_1$ to $C_6$ aliphatic or cycloaliphatic hydrocarbon radical or a $C_6$ to $_{12}$ aromatic radical.

3. The high molecular weight diimide diacid of Claim 1 wherein the tricarboxylic acid anhydride is trimellitic anhydride.

4. The high molecular weight diimide diacid of Claim 1 wherein the polyoxyalkylene diamine is selected from the group consisting of amine terminated poly(propylene ether)glycol, amine terminated poly(ethylene ether)glycol, amine terminated poly(tetramethylene ether)glycol and amine terminated co-poly(ethylene ether-propylene ether) glycol.

5. The high molecular weight diimide diacid of Claim 1 wherein the polyoxyalkylene diamine is amine terminated poly(propylene ether)glycol.

6. The high molecular weight diimide diacid of Claim 1 wherein the polyoxyalkylene diamine is amine terminated co-poly(ethylene ether - propylene ether)glycol have a predominately polyethylene ether backbone.

7. Diimide diacids of the formula:

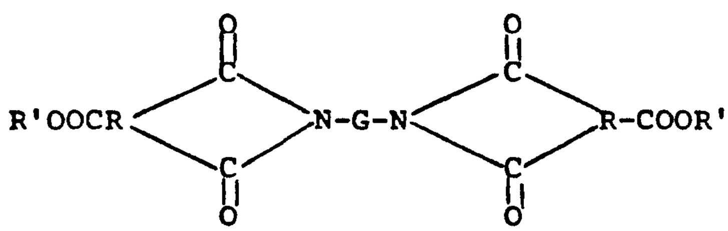

wherein R is a $C_2$ to $C_{20}$ aliphatic, cycloaliphatic or aromatic trivalent radical R' is selected from the group consisting of hydrogen, or a monovalent organic radical selected from the group consisting of $C_1$ to $C_6$ aliphatic or cycloaliphatic radical or a $C_6$ to $C_{12}$ aromatic radical, G is the divalent radical remaining after removal of the terminal hydroxy groups of a long chain ether glycol having a molecular weight of from about 600 to about 12000.

8. The diimide diacid of Claim 7 wherein R is a trivalent 6 membered aromatic hydrocarbon and R' is hydrogen.

9. The diimide diacid of Claim 7 wherein G is the divalent radical remaining after removal of the terminal hydroxy groups of a long chain ether glycol having a molecular weight of from about 900 to about 4000.
10. The diimide diacid of Claim 7 wherein G is the divalent radical remaining after removal of the terminal hydroxy groups of a long chain poly-(alkylene ether)glycol selected from the group consisting of poly(ethylene ether)glycol, poly-(propylene ether)glycol, poly(tetramethylene ether)glycol, and a random or block copoly-(ethylene oxide-propylene oxide)glycol.
11. The diimide diacid of Claim 7 wherein G is the divalent radical remaining after removal of the terminal groups of poly(propylene ether)glycol.
12. The diimide diacid of Claim 7 wherein G is the divalent radical remaining after removal of the terminal hydroxy groups of a co-poly(propylene ether-ethylene ether)glycol.
13. The diimide diacid of Claim 12 wherein the co-poly(propylene ether ethylene ether)glycol has a predominately poly(ethylene ether) backbone.